# EUROPÄISCHE PATENTSCHRIFT

(11) **EP 0 418 473 B1**
(45) Veröffentlichungstag und Bekanntmachung des Hinweises auf die Patenterteilung: **21.09.1994**
(21) Anmeldenummer: 90109927.5
(22) Anmeldetag: 25.05.1990
(51) Int. Cl.: F16J 15/32

(54) **Dichtungsanordnung für eine Welle**
Seal arrangement for a shaft
Arrangement de joint pour un arbre

(30) Priorität: 02.06.1989 US 360953
(43) Veröffentlichungstag der Anmeldung: 27.03.1991
(73) Patentinhaber: DEERE & COMPANY, Moline, Illinois 61265 (US)
(72) Erfinder: Sparks, Richard Marvin, Cedar Falls, Iowa 50613 (US); Kendall, Dean Tjepkes, Dike, Iowa 50624 (US)
(74) Vertreter: Feldmann, Bernhard

(56) Entgegenhaltungen:
- DE-U- 8 800 382
- GB-A- 2 208 243
- US-A- 4 049 281
- US-A- 4 106 781
- US-A- 4 285 526

## Beschreibung

Die Erfindung betrifft eine Dichtungsanordnung für relativ zueinander rotierende Teile mit einem an einem der Teile befestigten metallischen Ölrückhaltering, einem an dem anderen Teil befestigten Führungsring, einer elastischen ringförmigen Öldichtung, die an einem ersten Bereich des Ölrückhalteringes befestigt ist und dichtend mit dem Führungsring in gleitendem Eingriff steht, einer Lippendichtung, die mit dem Führungsring drehfest verbunden ist und dichtend mit dem Ölrückhaltering in gleitendem Eingriff steht, und einem am Führungsring drehfest festgelegten und mit dem Ölrückhaltering in gleitendem Eingriff stehendem Abstandsteil, welches zwischen dem Ölrückhaltering und dem Führungsring angeordnet ist und einen bestimmten Abstand zwischen beiden Ringen aufrecht erhält, um beispielsweise eine Beschädigung der Dichtungslippe der Lippendichtung zu verhüten.

Eine derartige Dichtungsanordnung ist durch die US-A- 3,021,161 bekannt geworden. Durch die bekannte Anordnung soll eine drehbare Welle gegenüber einem Gehäuseteil abgedichtet werden. Ein metallischer Ölrückhaltering ist mit dem Gehäuseteil verbunden und trägt an seinem radial innenliegenden Bereich eine elastische Öldichtung. Ferner ist ein Führungsring vorgesehen, der teilweise durch eine elastomerische Lage abgedeckt ist. Diese Lage trägt Dichtlippen, die gleitend und dichtend mit einem Bereich des Ölrückhalteringes in Eingriff stehen und die Öldichtung vor eintretendem Staub und Schmutz schützen. Ein Teil der Lage ist als Abstandsteil ausgebildet, das sich zwischen dem Führungsring und dem Ölrückhaltering erstreckt und beide Ringe auf Distanz hält.

Wegen hoher Temperaturen, die durch die Reibung zwischen dem Ölrückhaltering und der Lippendichtung einerseits und dem Ölrückhaltering und dem Abstandsteil andererseits auftreten, kann eine derartige Dichtungsanordnung Zuverlässigkeitsprobleme aufweisen.

Die mit der Erfindung zu lösende Aufgabe wird darin gesehen, eine gut gekühlte und gegen Reibungswärme widerstandsfähige Dichtungsanordnung der eingangs genannten Art zu schaffen.

Die Aufgabe wird bei einer gattungsgemäßen Dichtungsanordnung erfindungsgemäß durch die kennzeichnenden Merkmale des Patentanspruchs 1 gelöst.

Der erste Bereich des Ölrückhalteringes, der die Öldichtung trägt, und der zweite Bereich des Ölrückhalteringes, an dem das Abstandsteil und die Lippendichtung gleitend und dichtend angreifen, liegen radial voneinander getrennt und überdecken sich nicht. Ferner ist die dem Abstandsteil und der Lippendichtung gegenüberliegende Seite des zweiten Bereiches des Ölrückhalteringes dem zurückgehaltenen Öl ausgesetzt. Dadurch kann wenigstens ein Teil der Reibungswärme von dem Abstandsteil und der Lippendichtung auf kurzem Weg über den Ölrückhaltering an das Öl abgeführt werden.

Das Abstandsteil greift an dem zweiten Bereich des Ölrückhalteringes gleitend an. Dieser zweite Bereich liegt in der Nähe der Stelle, bei der der Ölrückhaltering mit einem der zueinander rotierenden Teile befestigt ist, so daß eine wirkungsvolle Ableitung der zwischen Abstandsteil und Ölrückhaltering entstehenden Reibungswärme über den Ölrückhaltering zu dem Befestigungsteil gegeben ist. Durch die gute Ableitung der Reibungswärme ist ein dauerhafter, zuverlässiger Betrieb der erfindungsgemäßen Dichtungsanordnung gegeben.

Zweckmäßigerweise ist bei einem an einem äußeren ruhenden Teil der Wellenverbindung befestigten Ölrückhaltering dessen erster Bereich, an dem die Öldichtung befestigt ist, radial innenliegend und der zweite Bereich, an dem das Abstandsteil angreift, radial außenliegend.

Der Ölrückhaltering weist vorzugsweise einen zylindrischen Bereich, mit dem er an einem zylindrischen Abschnitt des ruhenden Teiles anliegt, und einen sich an den zylindrischen Bereich anschließenden, sich im wesentlichen radial erstreckenden ringförmigen Flanschbereich, mit dem die Lippendichtung und das Abstandsteil in gleitendem und dichtendem Eingriff stehen, auf. Dabei liegt der zylindrische Bereich des Ölrückhalteringes zweckmäßigerweise radial außen und ist am nicht rotierenden Teil befestigt und ermöglicht eine gute mechanische Befestigung sowie einen guten Wärmeübergang.

Vorzugsweise hat der Führungsring einen sich im wesentlichen radial nach außen erstreckenden Flansch mit einem sich im äußeren Bereich daran anschließenden radial ausgerichteten ringförmigen Vorsprung, der in Richtung Ölrückhaltering weist. Das Abstandsteil kann an dem Führungsring durch Einschnappen, Kleben oder eine andere Befestigungsart in dem Winkel zwischen Flansch und Vorsprung festgelegt werden.

Gemäß einer weiteren vorteilhaften Ausgestaltung der Erfindung ist die Lippendichtung im wesentlichen V-förmig ausgebildet. Ein V-Schenkel bildet dabei eine an dem Ölrückhaltering anliegende Dichtlippe. Der andere V-Schenkel bildet den Grundkörper der Lippendichtung und wird durch einen axial nach außen ausgebuchteten, ringförmigen Kernbereich des Führungsringes aufgenommen.

Weitere vorteilhafte Ausgestaltungen und Weiterbildungen der Erfindung gehen aus den Unteransprüchen hervor.

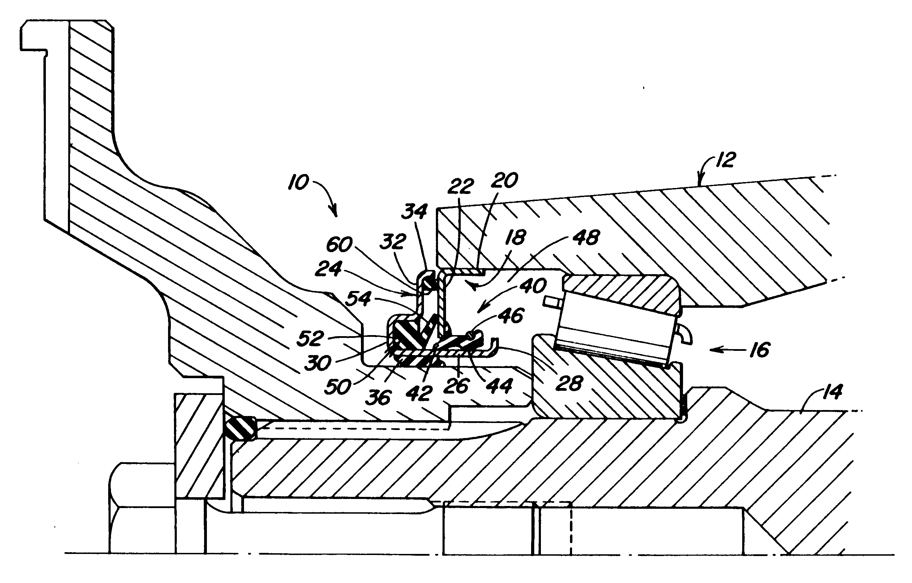

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Die einzige Figur zeigt eine erfindungsgemäße Dichtungsanordnung 10, die zwischen einem sich nicht drehenden Gehäuse 12 und einer sich durch dieses Gehäuse 12 erstrekkenden und im Gehäuse 12 durch übliche Lager 16 gelagerten Welle 14 angeordnet ist. Die Dichtungsanordnung 10 enthält einen ringförmigen Ölrückhaltering 18 aus Metall, vorzugsweise aus gestanztem Stahl. Der Ölrückhaltering 18 weist einen äußeren zylindrischen Bereich 20, der mit dem Gehäuse 12 drehfest und dichtend verbunden ist, und einen ringförmigen Flansch 22, der wie ein umgebogener Rand, sich ausgehend von dem nach außen weisenden Ende des zylindrischen Bereiches 20, radial nach innen erstreckt, auf.

Ein Führungsring 24 aus Metall, vorzugsweise aus gestanztem Stahl, ist drehfest mit der Welle 14 verbunden. Der Führungsring 24 enthält einen radial innenliegenden Hülsenabschnitt 26 mit einem axial innenliegenden, sich radial nach außen erstreckenden Bördelbereich 28, einem axial nach außen ausgebuchteten ringförmigen Kernbereich 30 und einem sich radial nach außen erstreckenden Bund 32, der einen sich axial nach innen erstreckenden Vorsprung 34 trägt. Ein ringförmiges Gummiteil 36 ist innerhalb des zylindrischen Hülsenabschnittes 26 des Führungsringes 24 an diesem befestigt. Das Gummiteil 36 nimmt die rotierende Welle 14 auf und verbindet dichtend, elastisch und drehfest den Führungsring 24 mit der Welle 14.

Eine ringförmige Öldichtung 40, wie sie für sich genommen aus der US-A- 4,376,541 bekannt ist (auf die hiermit zum Zwecke der Offenbarung Bezug genommen wird), ist an dem radial inneren Ende des feststehenden Ölrückhalteringes 18 festgelegt und weist ein Lippenpaar 42 und 44 auf, das dichtend und gleitend mit dem rotierenden Hülsenabschnitt 26 des Führungsringes 24 in Eingriff steht. Eine ringförmige Spannfeder 46 unterstützt das Zusammenschnüren des Öldichtungsringes 40 über dem Führungsring 24. Der Ölrückhaltering 18, der Öldichtungsring 40, der Führungsring 24 und das Gummiteil 36 begrenzen eine Kammer 48 und halten Schmieröl in der Kammer 48 zurück.

Eine ringförmige Staubdichtung 50 mit V-förmigem Querschnitt, die als Lippendichtung ausgebildet ist und beispielsweise durch die Firma Forsheda Shaft Seal Corporation, USA, bereitgestellt wird, weist einen Grundkörper 52 und eine Dichtlippe 54 auf. Der Grundkörper 52 wird von dem ausgebuchteten Kernbereich 30 des Führungsringes 24 aufgenonmen, und die Dichtlippe 54 erstreckt sich von dem Kernbereich 52 aus schräg radial auswärts und axial nach innen. Das Ende der Dichtlippe 54 steht gleitend und dichtend mit dem Flansch 22 des Ölrückhalteringes 18 in Eingriff und hält Verunreinigungen von dem Öldichtungsring 40 ab.

Es wird hervorgehoben, daß die Dichtlippe 54 an einer Stelle an dem Flansch 22 angreift, die radial außerhalb des Bereiches liegt, in dem der Öldichtungsring 40 den Flansch kontaktiert. Hierdurch steht das Schmieröl in der Kammer 48 mit dem Bereich der Innenfläche des Flansches 22 in Kontakt, der dem Berührungspunkt der Dichtungslippe 54 mit dem Flansch 22 unmittelbar gegenüberliegt. Dies erlaubt es dem in der Kammer 48 eingeschlossenen Schmieröl, Wärme, die durch Reibungseingriff zwischen der sich drehenden Dichtlippe 54 und dem nichtdrehenden Flansch 22 erzeugt wird, abzuleiten. Wärme kann ferner über den metallischen Ölrückhaltering 18 zu dem Gehäuse 12 abgeleitet werden.

Ein Abstandsring oder eine Abstandsscheibe 60 ist zwischen dem Führungsring 24 und dem Ölrückhaltering 18 angeordnet. Die Abstandsscheibe 60 wird vorzugsweise durch den ringförmigen Vorsprung 34 des Führungsringes 24 aufgenommen. Sie kann federnd und drehfest mit dem Führungsring verbunden sein, indem sie durch eine Verrastung oder ein Aufschnappen gegenüber dem Vorsprung verspannt wird. Die drehfeste Verbindung zwischen Abstandsscheibe 60 und Führungsring 24 kann auch durch Verkleben beider Teile erfolgen.

Die Abstandsscheibe 60 besteht vorzugsweise aus einem Polyamid-Material, wie beispielsweise "Riton", "Vespel" oder "Torlon", oder einem anderen relativ steifen Material mit geringem Reibwiderstand. Die Abstandsscheibe 60 dreht sich mit dem Führungsring 24 und steht mit dem Flansch 22 in gleitendem Eingriff. Sie dient der Einstellung und Aufrechterhaltung eines erforderlichen axialen Abstandes zwischen Führungsring 24 und Ölrückhaltering 18, um ein übermäßiges Zusammendrücken der Dichtlippe 54 zu vermeiden. Das Zusammendrücken der Dichtlippe 54 könnte zu einer Erhöhung der Reibung zwischen Ölrückhaltering 18 und Führungsring 24 und damit zu einer Erhöhung der Reibungswärme führen. Die Abstandsscheibe 60 greift an dem Flansch 22 des Ölrückhalteringes 18 an einer Stelle an, die nahe des radial äußeren Umfanges des Flansches 22 und somit in der Nähe des zylindrischen Bereiches 20 des Ölrückhalteringes 18 liegt. Die der Abstandsscheibe 60 gegenüberliegende Seite des Ölrückhalteringes 18 ist unmittelbar dem Schmieröl der Kammer 48 ausgesetzt. Hierdurch kann die durch Gleitreibung zwischen Abstandsring 60 und Ölrückhaltering 18 auftretende Wärme schnell zu dem Gehäuse 12 abgeleitet werden, und zwar sowohl über das Öl als auch durch Wärmeleitung über den relativ kurzen Weg des äußeren zylindrischen Bereiches 20 des metallischen Ölrückhalteringes 18.

An Stelle der hier beschriebenen Dichtungen können auch andere bekannte Öldichtungen und Staubdichtungen verwendet werden. Dabei liegt der Reibungseingriff mit dem Ölrückhaltering an einer Stelle, die gewährleistet, daß Wärme schnell durch das Schmieröl und durch Wärmeleitung abgeführt werden kann.

## Patentansprüche

1. Dichtungsanordnung für relativ zueinander rotierende Teile (12, 14) mit einem an einem der Teile (12) befestigten metallischen Ölrückhaltering (18), einem an dem anderen Teil (14) befestigten Führungsring (24), einer elastischen ringförmigen Öldichtung (40), die an einem ersten Bereich des Ölrückhalteringes (18) befestigt ist und dichtend mit dem Führungsring (24) in gleitendem Eingriff steht, einer Lippendichtung (50), die mit dem Führungsring (24) drehfest verbunden ist und dichtend mit dem Ölrückhaltering (18) in gleitendem Eingriff steht, und einem am Führungsring (24) drehfest festgelegten und mit dem Ölrückhaltering (18) in gleitendem Eingriff stehendem Abstandsteil (60), welches zwischen dem Ölrückhaltering (18) und dem Führungsring (24) angeordnet ist und einen bestimmten Abstand zwischen beiden Ringen (18, 24) aufrechterhält, dadurch gekennzeichnet, daß das Abstandsteil (60) und die Lippendichtung (50) an einem zweiten Bereich des Ölrückhalteringes (18) gleitend und dichtend angreifen, der sich radial nicht mit dem ersten Bereich überdeckt und dessen gegenüberliegende Seite dem in einer Kammer (48) zurückgehaltenen Öl ausgesetzt ist, wobei das Abstandsteil (60) in bezug auf die Lippendichtung (50) näher an der Befestigungsstelle des Ölrückhalteringes (18) an dem einen der zueinander rotierenden Teile (12) anliegt, so daß eine wirkungsvolle Ableitung der einerseits zwischen Abstandsteil (60) und Ölrückhaltering (18) und andererseits zwischen Lippendichtung (50) und Ölrückhaltering (18) entstehenden Reibungswärme über den Ölrückhaltering (18) und über das in der Kammer (48) eingeschlossene Schmieröl zu dem einen der zueinander rotierenden Teile (12) gegeben ist.

2. Dichtungsanordnung nach Anspruch 1, dadurch gekennzeichnet, daß der erste Bereich des Ölrückhalteringes (18) radial innen und der zweite Bereich radial außen liegt.

3. Dichtungsanordnung nach Anspruch 1 oder 2, dadurch gekennzeichnet, daß der Ölrückhaltering (18) einen zylindrischen Bereich (20), mit dem er an einem zylindrischen Abschnitt des einen der zueinander rotierenden Teile (12) anliegt, und einen sich an den zylindrischen Bereich (20) anschließenden, sich im wesentlichen radial erstreckenden ringförmigen Flanschbereich (22), mit dem die Lippendichtung (50) und das Abstandsteil (60) in gleitendem und dichtendem Eingriff stehen, aufweist.

4. Dichtungsanordnung nach Anspruch 3, dadurch gekennzeichnet, daß der zylindrische Bereich (20) des Ölrückhalteringes (18) radial außen liegt und am nicht rotierenden Teil (12) befestigt ist.

5. Dichtungsanordnung nach einem der Ansprüche 1 bis 4, dadurch gekennzeichnet, daß die Öldichtung (40) an einem radial inneren ersten Bereich des Ölrückhalteringes (18) befestigt ist und die Lippendichtung (50) und das Abstandsteil (60) an einem radial außerhalb des ersten Bereiches liegenden zweiten Bereich des Ölrückhalteringes (18) gleitend und dichtend angreifen.

6. Dichtungsanordnung nach einem der Ansprüche 1 bis 5, dadurch gekennzeichnet, daß der Führungsring (24) einen sich radial nach außen erstreckenden Flansch (32) mit einem sich im äußeren Bereich daran anschließenden axial ausgerichteten ringförmigen Vorsprung (34), der in Richtung Ölrückhaltering (18) weist, enthält.

7. Dichtungsanordnung nach Anspruch 6, dadurch gekennzeichnet, daß das Abstandsteil (60) von dem Vorsprung (34) des Führungsringes (24) wenigstens teilweise umfaßt wird.

8. Dichtungsanordnung nach einem der Ansprüche 1 bis 7, dadurch gekennzeichnet, daß die Lippendichtung (50) im wesentlichen V-förmig ausgebildet ist, wobei ein V-Schenkel eine an dem Ölrückhaltering (18) anliegende Dichtlippe (54) bildet, und daß der Führungsring (24) einen axial nach außen ausgebuchteten, ringförmigen Kernbereich (30) aufweist, der den Grundkörper (52) der Lippendichtung (50) aufnimmt.

## Claims

1. Seal arrangement for parts (12, 14) rotating relative to one another with a metal oil retaining ring (18) fastened to one of the parts (12), a guide ring (24) fastened to another part (14), an elastic ring-shaped oil seal (40), which is fastened to a first area of the oil retaining ring (18) and is arranged in a sliding engagement with the guide ring (24) to form a seal, a lip seal (50), which is non-rotatably connected to the guide ring (24) and is disposed in a sliding engagement with the oil retaining ring (18) to form a seal, and a spacer (60), which is non-rotatably fixed to the guide ring (24) and is disposed in a sliding engagement with the oil retaining ring (18), and which is arranged between the oil retaining ring (18) and the guide ring (24) and maintains a determined distance between both rings (18, 14), characterised in that the spacer (60) and the lip seal (50) are disposed to slide and form a seal on a second area of the oil retaining ring (18), which is not radially covered by the first area and the opposite side of which is exposed to the oil retained in a chamber (48), whereby with respect to the lip seal (50) closer to the fastening point of the oil retaining ring (18), the spacer (60) abuts against one of the parts (12) rotating relative to one another, so that the friction heat produced between the spacer (60) and oil retaining ring (18) on the one hand and between the lip seal (50) and oil retaining ring (18) on the other is effectively diverted to one of the parts (12) rotating relative to one another via the oil retaining ring (18) and via the lubricating oil contained in the chamber (48).

2. Seal arrangement according to Claim 1, characterised in that the first area of the oil retaining ring (18) is located radially on the inside and the second area is located radially on the outside.

3. Seal arrangement according to Claim 1 or 2, characterised in that the oil retaining ring (18) has a cylindrical area (20), at which it abuts against a cylindrical section of one of the parts (12) rotating relative to one another, and a ring-shaped flange area (22), which abuts against the cylindrical area (20) and extends essentially radially, and with which the lip seal (50) and the spacer (60) engage to slide and form a seal.

4. Seal arrangement according to Claim 3, characterised in that the cylindrical area (20) of the oil retaining ring (18) is located radially on the outside and is fastened to the non-rotating part (12).

5. Seal arrangement according to one of Claims 1 to 4, characterised in that the oil seal (40) is fastened to a first area of the oil retaining ring (18) located radially on the inside, and the lip seal (50) and the spacer (60) are disposed to slide and form a seal on a second area of the oil retaining ring (18) located radially outside the first area.

6. Seal arrangement according to one of Claims 1 to 5, characterised in that the guide ring (24) is provided with a flange (32) extending radially outwards with an axially aligned, ring-shaped projection (34), which adjoins said flange in the outside area and points in the direction of the oil retaining ring (18).

7. Seal arrangement according to Claim 6, characterised in that the spacer (60) is at least partially enclosed by the projection (34) of the guide ring (24).

8. Seal arrangement according to one of Claims 1 to 7, characterised in that the lip seal (50) is substantially V-shaped, wherein one leg of the V forms a sealing lip (54) abutting against the oil retaining ring (18), and that the guide ring (24) has a ring-shaped core area (3) bulging axially outwards, which receives the base body (52) of the lip seal (50).

## Revendications

1. Arrangement de joint d'étanchéité pour des pièces (12, 14) rotatives l'une par rapport à l'autre, avec une bague de retenue d'huile métallique (18) fixée à une (12) des pièces, une bague de guidage (24) fixée à l'autre pièce (14), un joint étanche à l'huile (40) annulaire et élastique, qui est fixé à une première région de la bague de retenue d'huile (18) et engage en glissement et en étanchéité la bague de guidage (24), un joint à lèvre (50), qui est assemblé en rotation solidaire à la bague de guidage (24) et engage en glissement et en étanchéité la bague de retenue d'huile (18), et un écarteur (60), qui est fixé en rotation solidaire à la bague de guidage (24) et engage en glissement la bague de retenue d'huile (18), et qui est disposé entre la bague de retenue d'huile (18) et la bague de guidage (24) et maintient un écartement déterminé entre les deux bagues (18, 24), **caractérisé** en ce que l'écarteur (60) et le joint à lèvre (50) engagent en glissement et en étanchéité une deuxième région de la bague de retenue d'huile (18) qui ne se superpose radialement pas avec la première région et dont le côté opposé est exposé à l'huile retenue dans une chambre (48), l'écarteur (60) s'appliquant, par rapport au joint à lèvre (50), plus près du point de fixation de la bague de retenue d'huile (18) contre une (12) des pièces en rotation relative, de sorte qu'on obtient une évacuation efficace vers l'une (12) des pièces en rotation relative, par l'intermédiaire de la bague de retenue d'huile (18) et par l'intermédiaire de l'huile de lubrification enfermée dans la chambre (48), de la chaleur de frottement produite d'une part entre l'écarteur (60) et la bague de retenue d'huile (18) et d'autre part entre le joint à lèvre (50) et la bague de retenue d'huile (18).

2. Arrangement de joint d'étanchéité selon la revendication 1, **caractérisé** en ce que la première région de la bague de retenue d'huile (18) se trouve radialement à l'intérieur et la deuxième région radialement à l'extérieur.

3. Arrangement de joint d'étanchéité selon la revendication 1 ou 2, **caractérisé** en ce que la bague de retenue d'huile (18) présente une région cylindrique (20), par laquelle elle s'applique contre une partie cylindrique de l'une (12) des pièces en rotation relative, et une région de bride annulaire (22), se raccordant à la région cylindrique (20) et s'étendant essentiellement radialement, que le joint à lèvre (50) et l'écarteur (60) engagent en glissement et en étanchéité.

4. Arrangement de joint d'étanchéité selon la revendication 3, **caractérisé** en ce que la région cylindrique (20) de la bague de retenue d'huile (18) se trouve radialement à l'extérieur et est fixée à la pièce non rotative (12).

5. Arrangement de joint d'étanchéité selon l'une quelconque des revendications 1 à 4, **caractérisé** en ce que le joint étanche à l'huile (40) est fixé à une première région radialement intérieure de la bague de retenue d'huile (18), et le joint à lèvre (50) et l'écarteur (60) engagent une deuxième région de la bague de retenue d'huile (18) qui se trouve radialement à l'extérieur de la première région.

6. Arrangement de joint d'étanchéité selon l'une quelconque des revendications 1 à 5, **caractérisé** en ce que la bague de guidage (24) contient une bride (32) s'étendant radialement vers l'extérieur, avec une saillie annulaire (34) orientée axialement, qui se raccorde à la bride dans la région extérieure et est dirigée vers la bague de retenue d'huile (18).

7. Arrangement de joint d'étanchéité selon la revendication 6, **caractérisé** en ce que l'écarteur (60) est au moins partiellement entouré par la saillie (34) de la bague de guidage (24).

8. Arrangement de joint d'étanchéité selon l'une quelconque des revendications 1 à 7, **caractérisé** en ce que le joint à lèvre (50) est configuré essentiellement en forme de V, une branche du V formant une lèvre d'étanchéité (54) s'appliquant contre la bague de retenue d'huile (18), et en ce que la bague de guidage (24) présente une région centrale annulaire (30), renflée axialement vers l'extérieur, qui reçoit le corps de base (52) du joint à lèvre (50).
